# EUROPEAN PATENT APPLICATION

(11) **EP 3 493 303 A1**
(43) Date of publication of application: **05.06.2019**
(21) Application number: 17833541.0
(22) Date of filing: 25.07.2017
(51) Int. Cl.: H01M 4/62, H01M 4/133, H01M 4/131, H01M 4/134, H01M 4/1391, H01M 4/1393, H01M 4/1395, H01M 10/0525

(54) **NEGATIVE ELECTRODE MATERIAL AND PREPARATION METHOD THEREOF, NEGATIVE ELECTRODE, AND ALL-SOLID-STATE LITHIUM ION BATTERY**

(30) Priority: 29.07.2016 CN 201610614527
(71) Applicant: BYD Company Limited, Shenzhen, Guangdong 518118 (CN)
(72) Inventor: XIE, Jing, Shenzhen Guangdong 518118 (CN); GUO, Zizhu, Shenzhen Guangdong 518118 (CN); MA, Yongjun, Shenzhen Guangdong 518118 (CN); YI, Guangui, Shenzhen Guangdong 518118 (CN); SONG, Wei, Shenzhen Guangdong 518118 (CN); LI, Biao, Shenzhen Guangdong 518118 (CN)
(74) Representative: Hoffmann Eitle
(86) International application number: PCT/CN2017/094370
(87) International publication number: WO 2018/019238

(57) **Abstract**

The present disclosure provides a negative electrode material and a preparation method thereof, a negative electrode and an all-solid-state lithium-ion battery. The negative electrode material includes a negative electrode active substance and a coating layer on the surface of the negative electrode active substance, the coating layer including a polymer electrolyte and a sulfide solid electrolyte.

## Description

### CROSS-REFERENCE TO RELATED APPLICATIONS

The present disclosure claims priority to Chinese Patent Application No. 201610614527.2 filed in China on July 29, 2016, the entire content of which is hereby incorporated by reference.

### FIELD

The present disclosure belongs to the field of lithium-ion batteries, and in particular, to a negative electrode material and a preparation method thereof, a negative electrode and an all-solid-state lithium-ion battery including the same.

### BACKGROUND

In the prior art, most of the negative electrode materials of the all-solid-state lithium-ion battery are metal lithium, lithium indium alloy or graphite. The former lithium or lithium indium alloy has the problems of high costs, poor safety performance and poor compatibility with the inorganic solid electrolyte material; in the process of preparing an all-solid-state lithium-ion battery by using the latter graphite or other negative electrode materials, the preparation of the negative electrode inevitably uses a sheet pressing technique or a coating technique. The sheet pressing technique includes the steps of mixing a negative electrode active material, an inorganic solid electrolyte powder and a negative electrode conductive agent in a certain ratio, and then pressing into a negative electrode sheet under a certain pressure; and the coating technique includes the steps of mixing a negative electrode active material, an inorganic solid electrolyte, a negative electrode conductive agent and a negative electrode binder in a certain ratio with a solvent to obtain a slurry, and then coating the slurry on a current collector to obtain a negative electrode sheet. Regardless of whether it is a sheet pressing technique or a coating technique, the contact between the negative electrode active material and the solid electrolyte is a point contact or a line contact, which is disadvantageous for the transfer of lithium ions inside the negative electrode. In addition, for the sheet-pressed negative electrode sheet, in the charging and discharging process of the battery, the volume expansion or contraction of the negative electrode active material causes the solid-solid contact interface between the negative electrode active material and the inorganic solid electrolyte particles to further deteriorate, and when the battery is impacted by a large external, the resulting effect on the interface is larger. For the coated negative electrode sheet, since the binder component needs to be added at the time of coating and the binder component is a non-ionic conductor, the conduction of lithium ions inside the negative electrode is further affected to affect the electrochemical performance of the battery.

### SUMMARY

In view of the above technical problems, the present disclosure provides a negative electrode material. The negative electrode material includes a negative electrode active substance and a coating layer on the surface of the negative electrode active substance, the coating layer including a polymer electrolyte and a sulfide solid electrolyte.

The present disclosure can reduce the direct contact between the negative electrode active substance and the inorganic solid electrolyte by forming an external component coated on a surface of the negative electrode active substance, wherein the external component containing a polymer electrolyte and a sulfide solid electrolyte; So as to alleviate the interface problem between the negative electrode and the inorganic solid electrolyte.

The present disclosure further provides a preparation method of a negative electrode material, including:
dissolving a polymer and a lithium salt in a mass ratio of (20 to 85):(80 to 15) in an organic solvent to prepare a polymer electrolyte;
mixing the prepared polymer electrolyte with a sulfide solid electrolyte to obtain an emulsion; and
adding a negative electrode active substance into the emulsion, and drying to obtain the negative electrode material, where the negative electrode material includes a negative electrode active substance and a coating layer on the surface of the negative electrode active substance, the coating layer including the polymer electrolyte and the sulfide solid electrolyte.

The present disclosure further provides a negative electrode including a negative electrode current collector and a negative electrode material layer on the surface of the negative electrode current collector, the negative electrode material layer including a negative electrode material and a negative electrode conductive agent, where the negative electrode material is the negative electrode material provided in the present disclosure.

The present disclosure further provides an all-solid-state lithium-ion battery including a positive electrode, a negative electrode and an inorganic solid electrolyte layer, the negative electrode being the negative electrode provided in the present disclosure.

Other features and advantages of the present disclosure will be described in detail in the following detailed description.

### BRIEF DESCRIPTION OF THE DRAWINGS

The accompanying drawings are included to provide a further understanding of the present disclosure and constitute a part of the specification. They are used to explain the present disclosure together with the specific implementations below, but are not intended to limit the present disclosure. In the accompanying drawings:
FIG. 1 is a scanning electron microscope (SEM) graph of a negative electrode material prepared in Example 1;
FIG. 2 is an EDS element surface scanning view of a titanium element in the negative electrode material prepared in Example 1;
FIG. 3 is an EDS element surface scanning view of a sulfur element in the negative electrode material prepared in Example 1;
FIG. 4 is an EDS element surface scanning view of a phosphorus element in the negative electrode material prepared in Example 1; and
FIG. 5 is an EDS element surface scanning view of a fluorine element in the negative electrode material prepared in Example 1.

### DETAILED DESCRIPTION

To make the technical problems to be resolved by the present disclosure, technical solutions, and beneficial effects more comprehensible, the following further describes the present disclosure in detail with reference to specific implementations. It should be understood that the specific embodiments described therein are merely used for explain the present disclosure instead of limiting the present disclosure.

The present disclosure provides a negative electrode material. The negative electrode material includes a negative electrode active substance and a coating layer on the surface of the negative electrode active substance, the coating layer including a polymer electrolyte and a sulfide solid electrolyte.

According to the negative electrode material provided in the present disclosure, optionally, the sulfide solid electrolyte is selected from one or more of amorphous Li₂S-P₂S₅, crystalline Li₄MS₄, crystalline Li₁₀NP₂S₁₂ and microcrystalline Li₂S-P₂S₅-LiX; where M is selected from one or more of Si, Ge and Sn, N is selected from one or more of Si, Ge and Sn, and X is selected from one or more of Cl, Br and I.

According to the negative electrode material provided in the present disclosure, optionally, the amorphous Li₂S-P₂S₅ is selected from one or more of amorphous 70Li₂S-30P₂S₅, amorphous 75Li₂S-25P₂S₅ and amorphous 80Li₂S-20P₂S₅; the crystalline Li₄MS₄ is selected from one or more of crystalline Li₄SnS₄, crystalline Li₄GeS₄ and crystalline Li₄SiS₄; the crystalline Li₁₀NP₂S₁₂ is selected from one or more of crystalline Li₁₀SiP₂S₁₂, crystalline Li₁₀SnP₂S₁₂ and crystalline Li₁₀GeP₂S₁₂; and the microcrystalline Li₂S-P₂S₅-LiX is selected from one or more of microcrystalline Li₂S-P₂S₅-LiCl, microcrystalline Li₂S-P₂S₅-LiBr and microcrystalline Li₂S-P₂S₅-LiI.

According to the negative electrode material provided in the present disclosure, optionally, the polymer electrolyte is selected from one or more of a polyoxyethylene-based polymer electrolyte, a polyvinylidene-fluoride-based polymer electrolyte, a polyacrylonitrile-based polymer electrolyte, a polymethyl-methacrylate-based polymer electrolyte and a polyethylene-based polymer electrolyte.

The polymer electrolyte in the present disclosure is a polymer electrolyte in the conventional sense in the prior art, namely, a complex of a polymer and a lithium salt formed by a complex reaction of a polymer and a lithium salt under certain conditions.

The inventors of the present disclosure have found in multiple tests that when the surface of the negative electrode active substance is coated with the coating layer containing the polymer electrolyte and the sulfide solid electrolyte to prepare the lithium-ion battery negative electrode material, the prepared battery has high safety performance and cycle performance. On the one hand, the inventors of the present disclosure have found that the polymer electrolyte contained in the coating layer has good lithium ion conductivity and good binding properties, and thus can reduce the use of the non-ionic conductive component binder in the negative electrode slurry coating process, and the polymer electrolyte component also has certain elastomeric properties, and thus can alleviate the volume expansion effect of the negative electrode active substance in the charging and discharging process to a certain extent. On the other hand, the sulfide solid electrolyte contained in the coating layer can improve the ionic conductivity of the shell polymer electrolyte, and also can improve the electrochemical window of the polymer electrolyte in the coating layer, so that the obtained negative electrode material can match the inorganic solid electrolyte with high ionic conductivity and the negative electrode, and the obtained battery has higher safety performance and long cycle life. Moreover, after many tests, the inventors have found that the polyelectrolyte not only has good binding properties, but also has good ionic conductivity; and after the mixture of the polyelectrolyte and the sulfide solid electrolyte is coated on the surface of the negative electrode active substance, the solid-solid interface effect between the prepared negative electrode and the inorganic solid electrolyte is alleviated, and the charging/discharging capacity is also well improved.

According to the negative electrode material provided in the present disclosure, optionally, the mass ratio of the polymer electrolyte to the sulfide solid electrolyte is 1:99 to 99:1. Optionally, the mass ratio of the polymer electrolyte to the sulfide solid electrolyte is 2:8 to 1:99, or the mass ratio of the polymer electrolyte to the sulfide solid electrolyte is 8:2 to 99:1. Optionally, the mass ratio of the polymer electrolyte to the sulfide solid electrolyte is 1:9 to 1:99, or the mass ratio of the polymer electrolyte to the sulfide solid electrolyte is 9:1 to 99:1.

The inventors of the present disclosure have found that when the mass ratio of the polymer electrolyte to the sulfide solid electrolyte is 1:9 to 1:99, or when the mass ratio of the polymer electrolyte to the sulfide solid electrolyte is 9:1 to 99:1, the prepared negative electrode exhibits higher ionic conductivity.

According to the negative electrode material provided in the present disclosure, optionally, the mass ratio of the total amount of the polymer electrolyte and the sulfide solid electrolyte to the negative electrode active substance is (50 to 5):(50 to 95).

The inventors of the present disclosure have found that when the mass ratio of the polymer electrolyte to the sulfide solid electrolyte in the coating layer and the mass ratio of the total amount of the polymer electrolyte and the sulfide solid electrolyte to the negative electrode active substance are controlled within the range described in the present disclosure, it can alleviate the problem of the solid-solid interface effect between the negative electrode active substance and the inorganic solid electrolyte layer, and at the same time ensure good charging and discharging performance of the negative electrode.

According to the negative electrode material provided in the present disclosure, the negative electrode active substance may be various negative electrode active substances conventionally used in an all-solid-state lithium-ion battery. Optionally, the negative electrode active substance is selected from one or more of natural graphite, lithium titanate and silicon-carbon composite.

The present disclosure further provides a preparation method of a negative electrode material, including:
dissolving a polymer and a lithium salt in a mass ratio of (20 to 85):(80 to 15) in an organic solvent to prepare a polymer electrolyte;
mixing the prepared polymer electrolyte with a sulfide solid electrolyte to obtain an emulsion; and
adding a negative electrode active substance into the emulsion, and drying to obtain the negative electrode material, where the negative electrode material includes a negative electrode active substance and a coating layer on the surface of the negative electrode active substance, the coating layer including the polymer electrolyte and the sulfide solid electrolyte.

According to the preparation method of the negative electrode material provided in the present disclosure, optionally, the polymer is selected from one or more of polyoxyethylene, polyvinylidene fluoride, polyacrylonitrile, polymethyl methacrylate and polyethylene. The lithium salt is selected from one or more of LiPF₆, LiAsF₆, LiClO₄, LiBF₆, LiN(CF₃SO₃)₂, LiCF₃SO₃, LiC(CF₃SO₃)₂ and LiN(C₄F₉SO₂) (CF₃SO₃).

In some embodiments of the present disclosure, the preparation method of the negative electrode material provided in the present disclosure further includes: dissolving the polymer and the lithium salt in a mass ratio of (20 to 85):(80 to 15) in an organic solvent, and stirring and mixing for 1 to 48h, during which the polymer and the lithium salt are subjected to a complex reaction to obtain the polymer electrolyte; and adding a sulfide solid electrolyte to the prepared polymer electrolyte, and stirring and mixing for 1 to 48h to obtain the emulsion.

According to the preparation method of the negative electrode material provided in the present disclosure, the organic solvent may be an organic solvent conventionally used in the art, for example, the organic solvent may be selected from one or more of acetonitrile, N-methyl amide, acetone, toluene, tetrahydrofuran, butyl butyrate, N-methylpyrrolidone, n-heptane and ethanol. Optionally, the water content in the organic solvent is 30 ppm or below.

According to the preparation method of the negative electrode material provided in the present disclosure, optionally, the mass of the added sulfide solid electrolyte satisfies: the mass ratio of the polymer electrolyte to the sulfide solid electrolyte is 1:99 to 99:1. Optionally, the mass ratio of the polymer electrolyte to the sulfide solid electrolyte is 2:8 to 1:99, or the mass ratio of the polymer electrolyte to the sulfide solid electrolyte is 8:2 to 99:1. Optionally, the mass ratio of the polymer electrolyte to the sulfide solid electrolyte is 1:9 to 1:99, or the mass ratio of the polymer electrolyte to the sulfide solid electrolyte is 9:1 to 99:1.

The present disclosure further provides a negative electrode including a negative electrode current collector and a negative electrode material layer on the surface of the negative electrode current collector, the negative electrode material layer including a negative electrode material and a negative electrode conductive agent, where the negative electrode material is the negative electrode material provided above in the present disclosure.

According to the negative electrode provided in the present disclosure, preferably, the surface of the negative electrode conductive agent is coated with a polymer electrolyte and a sulfide solid electrolyte.

The method of coating the surface of the negative electrode conductive agent with the polymer electrolyte and the polymer electrolyte may include: firstly preparing a mixed emulsion of the polymer electrolyte and the sulfide solid electrolyte, adding the negative electrode conductive agent into the above emulsion, and drying to obtain the negative electrode conductive agent coated with the polymer electrolyte and the sulfide solid electrolyte. Meanwhile, the method of coating the surface of the negative electrode conductive agent with the polymer electrolyte and the sulfide solid electrolyte may also include: in the process of preparing the negative electrode material of the present disclosure, adding the negative electrode conductive agent while adding the negative electrode active substance, so that the polymer electrolyte and the sulfide solid electrolyte form a coating on the surfaces of the negative electrode active substance and the negative electrode conductive agent at the same time. In the present disclosure, it is optional to use the latter method, which can further simplify the technique in addition to forming a coating on the surfaces of the negative electrode active substance and the negative electrode conductive agent at the same time.

The present disclosure further provides an all-solid-state lithium-ion battery including a positive electrode, a negative electrode and a solid electrolyte layer, the solid electrolyte layer including a sulfide solid electrolyte, and the negative electrode being the negative electrode provided in the present disclosure.

According to the all-solid-state lithium-ion battery provided in the present disclosure, the preparation method of the positive electrode is not particularly limited in the present disclosure, and is the conventional preparation method of the positive electrode in the art, including: mixing a positive electrode active substance, a positive electrode conductive agent and a positive electrode binder in the conventional ratio in the art with an organic solvent to prepare a positive electrode slurry, coating the positive electrode slurry on a positive electrode current collector, and drying to obtain the positive electrode; where the positive electrode active substance is a positive electrode active substance conventionally used in the art; optionally, the positive electrode active substance is selected from one or more of LiFeₓMn_{y}M_{z}PO₄ (0≤x≤1, 0≤y≤1, 0≤z≤1, x+y+z=1, where M is at least one of Al, Mg, Ga, Ti, Cr, Cu, Zn and Mo), Li₃V₂(PO₄)₃, Li₃V₃(PO₄)₃, LiNi_{0.5-x}Mn_{1.5-y}M_{x+y}O₄ (-0.1≤x≤0.5, 0≤y≤1.5, M is at least one of Li, Co, Fe, Al, Mg, Ca, Ti, Mo, Cr, Cu and Zn), LiVPO₄F, Li₁₊ₓL_{1-y-z}M_{y}N_{z}O₂ (L, M and N are at least one of Li, Co, Mn, Ni, Fe, Al, Mg, Ga, Ti, Cr, Cu, Zn, Mo, F, I, S and B, -0.1≤x≤0.2, 0≤y≤1, 0≤z≤1, 0≤y+z≤1.0), Li₂CuO₂ and Li₅FeO₄. Optionally, the positive electrode active substance is selected from one or more of LiAl_{0.05}Co_{0.15}Ni_{0.80}O₂, LiCoO₂, LiMn₂O₄, LiFePO₄, LiMnPO₄, LiNiPO₄, LiCoPO₄, LiNi_{0.5}Mn_{1.5}O₄, Li₃V₃(PO₄)₃, and the like; the positive electrode conductive agent is a conductive agent well known to those skilled in the art for use in a positive electrode of a high-voltage lithium-ion battery, and specifically, the positive electrode conductive agent may be selected from at least one of acetylene black, carbon nanotubes, HV and carbon black; and the above positive electrode binder is a binder well known to those skilled in the art for use in a positive electrode of a high-voltage lithium-ion battery. Specifically, the positive electrode binder may be selected from one or more of a fluorine-containing resin and a polyolefin compound such as polyvinylidene fluoride (PVDF), polytetrafluoroethylene (PTFE) and styrene-butadiene rubber (SBR).

The preparation method of the negative electrode is not particularly limited in the present disclosure, and is the conventional preparation method of the negative electrode in the art, including: mixing the negative electrode material of the present disclosure, a negative electrode conductive agent and an organic solvent to prepare a negative electrode slurry, coating the positive electrode slurry on a negative electrode current collector, and drying to obtain the positive electrode; or mixing the negative electrode material of the present disclosure, a negative electrode binder and a negative electrode conductive agent with an organic solvent to prepare a negative electrode slurry, coating the negative electrode slurry on the negative electrode current collector, and drying to obtain the negative electrode. The negative electrode material includes a negative electrode active substance and a coating layer on the surface of the negative electrode active substance, and the coating layer includes a polymer electrolyte and a sulfide solid electrolyte, where the negative electrode active substance is selected from one or more of natural graphite, modified natural graphite, petroleum coke, organic pyrolytic carbon, mesocarbon microbeads, carbon fibers, silicon, tin, germanium, tin alloy, silicon alloy, titanium dioxide, spinel-structure lithium titanate, iron oxide, cobalt oxide and manganese dioxide.

In the present disclosure, the negative electrode may also be prepared by the following method, including: dissolving a polymer and a lithium salt in a ratio of (20 to 85):(80 to 15) in an organic solvent to prepare a polymer electrolyte, mixing the prepared polymer electrolyte and a sulfide solid electrolyte to obtain an emulsion, adding a negative electrode active substance and a negative electrode conductive agent into the emulsion, sufficiently dispersing, uniformly coating the mixture on a negative electrode current collector, and drying to prepare the negative electrode.

In the present disclosure, the preparation method of the negative electrode may be carried out in an inert atmosphere, optionally in an argon atmosphere.

In an embodiment of the present disclosure, the negative electrode may optionally include a negative electrode binder. Since the polymer electrolyte of the coating layer of the negative electrode material provided in the present disclosure has good ionic conductivity and binding properties, the negative electrode may not contain a negative electrode binder, or may selectively contain a very small amount of negative electrode binder. The negative electrode conductive agent is not particularly limited in the present disclosure, and may be a conductive agent well known to those skilled in the art for use in a negative electrode of an all-solid-state lithium battery. Specifically, the negative electrode conductive agent may be selected from one or more of carbon black, acetylene black, furnace black, vapor grown carbon fiber (VGCF), conductive carbon black and conductive graphite. The negative electrode binder may also be a binder well known to those skilled in the art for use in a negative electrode of an all-solid-state lithium-ion battery. Specifically, the negative electrode binder may be selected from one or more of polythiophene, polypyrrole, polytetrafluoroethylene, polyvinylidene fluoride, polyethylene, polypropylene, polystyrene, polyacrylamide, ethylene-propylene-diene copolymer resin, styrene-butadiene rubber, polybutadiene, fluororubber, polyethylene oxide, polyvinylpyrrolidone, polyester resin, acrylic resin, phenolic resin, epoxy resin, polyvinyl alcohol, carboxypropyl cellulose, ethyl cellulose, sodium carboxymethyl cellulose and styrene-butadiene latex.

In the all-solid-state lithium-ion battery of the present disclosure, the negative electrode material of the present disclosure is used in the negative electrode, since the polymer electrolyte contained in the coating layer of the negative electrode material has good binding properties, no inactive negative electrode binder is required or only a small amount of negative electrode binder is required in the process of preparing the negative electrode, and correspondingly, the amount of the negative electrode conductive agent added in the positive electrode may also be reduced. Therefore, in the present disclosure, the content of the negative electrode binder is 0 to 5% based on the weight of the negative electrode material. The content of the negative electrode conductive agent is 0 to 10% based on the weight of the negative electrode material.

According to the all-solid-state lithium-ion battery provided in the present disclosure, where the inorganic solid electrolyte layer includes an inorganic solid electrolyte and a binder. The present disclosure has no particular requirements on the inorganic solid electrolyte and the binder in the inorganic solid electrolyte layer, which are an inorganic solid electrolyte and a binder conventional in the art. Optionally, the inorganic solid electrolyte is selected from a sulfide solid electrolyte. Optionally, the sulfide solid electrolyte is selected from one or more of amorphous Li₂S-P₂S₅, crystalline Li_{x'}M_{y'}PS_{z'} or microcrystalline Li₂S-P₂S₅, where M is one or more of Si, Ge and Sn, x'+4y'+5=2z', 0≤y'≤1. Optionally, the amorphous Li₂S-P₂S₅ is selected from one or more of amorphous 70Li₂S-30P₂S₅, amorphous 75Li₂S-25P₂S₅ and amorphous 80Li₂S-20P₂S₅. The microcrystalline Li₂S-P₂S₅ is selected from one or more of microcrystalline 70Li₂S-30P₂S₅, microcrystalline 75Li₂S-25P₂S₅ and microcrystalline 80Li₂S-20P₂S₅. The crystalline Li_{x'}M_{y'}PS_{z'} is selected from one or more of crystalline Li₃PS₄, crystalline Li₄SnS₄, crystalline Li₄GeS₄, crystalline Li₁₀SnP₂S₁₂, crystalline Li₁₀GeP₂S₁₂ and crystalline Li₁₀SiP₂S₁₂. The binder is selected from one or more of polyvinylidene fluoride (PVDF), polytetrafluoroethylene (PTFE) and styrene-butadiene rubber (SBR). The present disclosure has no special requirements on the thickness of the inorganic solid electrolyte layer and the ratio of the inorganic solid electrolyte to the binder in the inorganic solid electrolyte layer, which are the thickness of the inorganic solid electrolyte layer conventional in the art and the ratio of the inorganic solid electrolyte to the binder in the conventional inorganic solid electrolyte layer and are not described in detail herein.

According to the all-solid-state lithium-ion battery provided in the present disclosure, optionally, there are a plurality of inorganic solid electrolyte layers, and the inorganic solid electrolytes of the inorganic solid electrolyte layers are the same or different. In other words, the inorganic solid electrolytes of the inorganic solid electrolyte layers are selected from the same or different sulfide solid electrolytes. The inorganic solid electrolytes of the inorganic solid electrolytes layer are each independently selected from one or more of amorphous Li₂S-P₂S₅, crystalline Li_{x'}M_{y'}PS_{z'} or microcrystalline Li₂S-P₂S₅, where M is one or more of Si, Ge and Sn, x'+4y'+5=2z', 0≤y'≤1. In some embodiments of the present disclosure, the amorphous Li₂S-P₂S₅ is selected from one or more of amorphous 70Li₂S-30P₂S₅, amorphous 75Li₂S-25P₂S₅ and amorphous 80Li₂S-20P₂S₅. The microcrystalline Li₂S-P₂S₅ is selected from one or more of microcrystalline 70Li₂S-30P₂S₅, microcrystalline 75Li₂S-25P₂S₅ and microcrystalline 80Li₂S-20P₂S₅. The crystalline Li_{x'}M_{y'}PS_{z'} is selected from one or more of crystalline Li3PS₄, crystalline Li₄SnS₄, crystalline Li₄GeS₄, crystalline Li₁₀SnP₂S₁₂, crystalline Li₁₀GeP₂S₁₂ and crystalline Li₁₀SiP₂S₁₂. Optionally, there are two inorganic solid electrolyte layers, and the inorganic solid electrolytes of the two inorganic solid electrolyte layers are the same or different. That is, the inorganic solid electrolytes of the two inorganic solid electrolyte layers are selected from the same or different sulfide solid electrolytes.

According to the all-solid-state lithium-ion battery provided in the present disclosure, the sulfide solid electrolyte coated on the surface of the negative electrode active substance in the negative electrode material may be the same as or different from the sulfide solid electrolyte in the inorganic solid electrolyte layer.

In the present disclosure, the specific preparation method of the all-solid-state lithium-ion battery is not particularly limited, and is a conventional preparation method of an all-solid-state lithium-ion battery in the art, including sealing a cell in a battery case. The preparation of the cell is a conventional preparation method of a cell in an all-solid-state lithium-ion battery in the art, and is not particularly limited, including firstly preparing a positive electrode and then preparing a solid electrolyte layer on the surface of the positive electrode, the solid electrolyte layer in the present disclosure being an inorganic solid electrolyte layer. The method of preparing the inorganic solid electrolyte layer on the surface of the positive electrode includes: coating an inorganic solid electrolyte slurry on the surface of the positive electrode and drying to form an inorganic solid electrolyte layer on the surface of the positive electrode. The inorganic solid electrolyte slurry includes an inorganic solid electrolyte and a binder. In the present disclosure, the inorganic solid electrolyte is preferably a sulfide solid electrolyte; and the type of the binder and the ratio of the inorganic solid electrolyte to the binder are well known to those skilled in the art, and are not particularly limited in the present disclosure.

After the inorganic solid electrolyte layer is formed on the surface of the positive electrode, the negative electrode is attached to the inorganic solid electrolyte layer and then pressed to obtain the lithium-ion battery of the present disclosure.

In the present disclosure, it is also possible to firstly form the inorganic solid electrolyte layer on the surface of the negative electrode and then attach and press the positive electrode and the inorganic solid electrolyte to obtain the lithium-ion battery of the present disclosure.

According to the all-solid-state lithium-ion battery of the present disclosure, where there may be a plurality of inorganic solid electrolyte layers, and when there are a plurality of inorganic solid electrolyte layers, the preparation method of the all-solid-state lithium-ion battery includes: firstly forming a plurality of inorganic solid electrolyte layers on the surface of the positive electrode/negative electrode, and then pressing the negative electrode/positive electrode and the inorganic solid electrolyte layers to obtain the battery; and the preparation method of the battery may also include: firstly forming one or more inorganic solid electrolyte layers on the surface of the positive electrode or negative electrode, and then pressing the inorganic solid electrolyte layer on the surface of the positive electrode and the inorganic solid electrolyte layer on the surface of the negative electrode to obtain the battery.

According to the all-solid-state lithium-ion battery of the present disclosure, in some embodiments of the present disclosure, there are two inorganic solid electrolyte layers, and when there are two inorganic solid electrolyte layers, the preparation method of the all-solid-state lithium-ion battery includes: firstly forming two inorganic solid electrolyte layers on the surface of the positive electrode/negative electrode, and then pressing the negative electrode/positive electrode and the inorganic solid electrolyte layers to obtain the battery. The preparation method of the battery may also include: firstly forming one inorganic solid electrolyte layer respectively on the surfaces of the positive electrode and negative electrode, and then pressing the inorganic solid electrolyte layer on the surface of the positive electrode and the inorganic solid electrolyte layer on the surface of the negative electrode to obtain the battery.

According to the all-solid-state lithium-ion battery in the present disclosure, regardless of whether the inorganic solid electrolyte layer is a single layer or a plurality of layers, optionally, the inorganic solid electrolyte layer has a total thickness of 10 to 100 µm.

According to the lithium-ion battery provided in the present disclosure, by using the negative electrode material of the present disclosure, the negative electrode has high ionic conductivity, and the interface effect between the negative electrode and the inorganic solid electrolyte layer is small, so the prepared battery has high safety performance and good cycle performance.

The present disclosure will be further described in detail below by using embodiments.

### Example 1

(1) Preparation of positive electrode: 7.0 g of polyoxyethylene (molecular weight 600000) was weighed and dissolved in anhydrous acetonitrile, then 5.0 g of LiN(CF₃SO₃)₂ was added thereto, the mixture was magnetically stirred at room temperature for 20 h, 228.0 g of sulfide solid electrolyte 75Li₂S-25P₂S₅ (the sulfide electrolyte 75Li₂S-25P₂S₅ was previously prepared by high-energy ball milling) was added thereto, and the mixture was magnetically stirred at room temperature for 6 h to obtain an emulsion; and 750.0 g of LiCoO₂and 10.0 g of carbon nanotubes were added to the above emulsion and magnetically stirred for 2 h to form a stable and uniform positive electrode slurry, the positive electrode slurry was coated on an aluminum foil current collector and then dried at 80°C, and sheet pressing was carried out by a rolling press to obtain a positive electrode sheet.
(2) Preparation of negative electrode: 7.0 g of polyoxyethylene (molecular weight 600000) was weighed and dissolved in anhydrous acetonitrile, then 5.0 g of LiN(CF₃SO₃)₂ was added thereto, the mixture was magnetically stirred at room temperature for 20 h, 228.0 g of sulfide solid electrolyte 75Li₂S-25P₂S₅ (the sulfide solid electrolyte 75Li₂S-25P₂S₅ was previously prepared by high-energy ball milling) was added thereto, and the mixture was magnetically stirred at room temperature for 6 h to obtain an emulsion; and 375.0 g of lithium titanate and 10.0 g of carbon nanotubes were added to the prepared emulsion and magnetically stirred for 2 h to form a stable and uniform negative electrode slurry, the positive electrode slurry was coated on a copper foil current collector and then dried at 80°C, and sheet pressing was carried out by a rolling press to obtain a negative electrode sheet A1;
(3) Preparation of battery: 490 g of sulfide solid electrolyte Li₁₀GeP₂S₁₂ and 10 g of SBR were added to toluene, and then stirred in a vacuum mixer to form a stable and uniform electrolyte slurry; the electrolyte slurry was uniformly coated on the positive electrode sheet prepared above intermittently, transferred into an oven and dried at 80°C to form an inorganic solid electrolyte layer on the surface of the positive electrode; and the prepared negative electrode sheet A1 was superposed on the surface of the inorganic solid electrolyte layer on the surface of the positive electrode, and subjected to pressure compression under 360 MPa to carry out packaging to obtain an all-solid-state lithium-ion battery S1.

### Example 2

The same as in Example 1, except that in step (2), 375.0 g of lithium titanate was firstly added to the emulsion in the step (2), and the mixture was magnetically stirred for 2 h, and dried to obtain a negative electrode material; and 245.0 g of the negative electrode material was added to an organic solvent anhydrous toluene, then 4.0 g of carbon nanotubes and 2.5 g of SBR were added thereto and sufficiently dispersed to obtain a negative electrode slurry, the negative electrode slurry was coated on a copper foil current collector and then dried at 80°C, and sheet pressing was carried out by a rolling press to obtain a negative electrode sheet A2 and an all-solid-state lithium-ion battery S2.

### Example 3

The same as in Example 1, except that in step (3), 490 g of sulfide solid electrolyte Li₁₀GeP₂S₁₂ and 10 g of SBR were added to toluene and stirred in a vacuum mixer to form a stable and uniform electrolyte slurry; the electrolyte slurry was uniformly on the negative electrode sheet intermittently, and transferred into an oven and dried at 80°C to form an inorganic solid electrolyte layer on the surface of the negative electrode; and the prepared positive electrode was superposed on the surface of the inorganic solid electrolyte layer on the surface of the negative electrode, and subjected to pressure compression under 360 MPa to carry out packaging to obtain an all-solid-state lithium-ion battery S3.

### Example 4

The same as in Example 1, except that in step (2), 7.0 g of polyvinylidene fluoride was used instead of polyoxyethylene, acetone was used instead of acetonitrile, and 228.0 g of crystalline Li₄GeS₄ was used instead of amorphous sulfide solid electrolyte 75Li₂S-25P₂S₅ to prepare a negative electrode sheet A4 and an all-solid-state lithium-ion battery S4.

### Example 5

The same as in Example 1, except that in step (2), 7.0 g of polymethyl methacrylate was used instead of polyoxyethylene, acetone was used instead of acetonitrile, and 228.0 g of crystalline Li₃PS₄ was used instead of amorphous sulfide solid electrolyte 75Li₂S-25P₂S₅ to prepare a negative electrode sheet A5 and an all-solid-state lithium-ion battery S5.

### Example 6

The same as in Example 1, except that in step (2), 7.0 g of polyethylene was used instead of polyoxyethylene, 5.0 g of LiPF₆ was used instead of LiN(CF₃SO₃)₂, and 228.0 g of crystalline sulfide solid electrolyte Li₁₀GeP₂S₁₂ was used instead of amorphous sulfide solid electrolyte 75Li₂S-25P₂S₅ to prepare a negative electrode sheet A6 and an all-solid-state lithium-ion battery S6.

### Comparative Example 1

The same as in Example 1, except that in step (2), a negative electrode sheet DA1 and an all-solid-state lithium-ion battery DS1 were prepared without addition of the sulfide solid electrolyte 75Li₂S-25P₂S₅.

### Comparative Example 2

The same as in Example 1, except that in step (2), a negative electrode sheet DA2 and an all-solid-state lithium-ion battery DS2 were prepared without addition of the lithium salt LiN(CF₃SO₃)₂.

### Example 7

The same as in Example 1, except that in step (2), 250.0 g of natural graphite was used instead of lithium titanate to prepare a negative electrode sheet A7 and an all-solid-state lithium-ion battery S7.

### Comparative Example 3

The same as in Comparative Example 1, except that in step (2), 250.0 g of natural graphite was used instead of lithium titanate to prepare a negative electrode sheet DA3 and an all-solid-state lithium-ion battery DS3.

### Comparative Example 4

The same as in Comparative Example 2, except that in step (2), 250.0 g of natural graphite was used instead of lithium titanate to prepare a negative electrode sheet DA4 and an all-solid-state lithium-ion battery DS4.

### Example 8

The same as in Example 1, except that in step (2), 250.0 g of silicon-carbon composite was used instead of lithium titanate to prepare a negative electrode sheet A8 and an all-solid-state lithium-ion battery S8.

### Comparative Example 5

The same as in Comparative Example 1, except that in step (2), 250.0 g of silicon-carbon composite was used instead of lithium titanate to prepare a negative electrode sheet DA3 and an all-solid-state lithium-ion battery DS3.

### Comparative Example 6

The same as in Comparative Example 2, except that in step (2), 250.0 g of silicon-carbon composite was used instead of lithium titanate to prepare a negative electrode sheet DA4 and an all-solid-state lithium-ion battery DS4.

### Example 9

The same in Example 1, except that in step (2), 228.0 g of the microcrystalline sulfide solid electrolyte Li₂S-P₂S₅-LiI was used instead of the amorphous sulfide solid electrolyte 75Li₂S-25P₂S₅ to prepare a negative electrode sheet A9 and an all-solid-state lithium-ion battery S9.

### Example 10

The same as in Example 1, except that in step (2), the mass of the sulfide solid electrolyte 75Li₂S-25P₂S₅ added was 1.3 g, the mass of the lithium titanate added was 13.3 g, and the mass of the carbon nanotubes added was 0.4 g to prepare a negative electrode sheet A10 and an all-solid-state lithium-ion battery S10.

### Example 11

The same as in Example 1, except that in step (2), the mass of the sulfide solid electrolyte 75Li₂S-25P₂S₅ added was 0.24 g, the mass of the lithium titanate added was 122.4 g, and the mass of the carbon nanotubes added was 3.3 g to prepare a negative electrode sheet A11 and an all-solid-state lithium-ion battery S11.

### Example 12

The same as in Example 1, except that in step (2), the mass of the sulfide solid electrolyte 75Li₂S-25P₂S₅ added was 0.12 g, the mass of the lithium titanate added was 230.3 g, and the mass of the carbon nanotubes added was 6.1 g to prepare a negative electrode sheet A12 and an all-solid-state lithium-ion battery S12.

### Example 13

The same as in Example 1, except that in step (2), the mass of the sulfide solid electrolyte 75Li₂S-25P₂S₅ added was 11.88 g, the mass of the lithium titanate added was 60.0 g, and the mass of the carbon nanotubes added was 1.6 g to prepare a negative electrode sheet A13 and an all-solid-state lithium-ion battery S13.

### Example 14

The same as in Example 1, except that in step (2), the mass of the sulfide solid electrolyte 75Li₂S-25P₂S₅ added was 11.88 g, the mass of the lithium titanate added was 24.0 g, and the mass of the carbon nanotubes added was 0.64 g to prepare a negative electrode sheet A13 and an all-solid-state lithium-ion battery S13.

### Example 15

The same as in Example 1, except that in step (2), the mass of the sulfide solid electrolyte 75Li₂S-25P₂S₅ added was 10.8 g, the mass of the lithium titanate added was 180.0 g, and the mass of the carbon nanotubes added was 4.8 g to prepare a negative electrode sheet A13 and an all-solid-state lithium-ion battery S13.

### Performance Testing

### (1) SEM test and EDS element surface scanning test

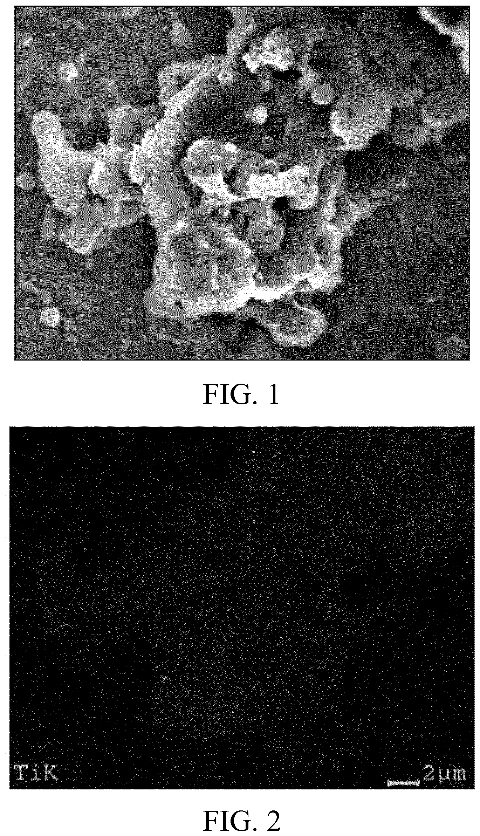

Under the protection of an argon atmosphere, the negative electrode material in Example 1 was subjected to SEM test using a scanning electron microscope JEOL, and the negative electrode material in Example 1 was subjected to EDS element surface scanning test using JSM-7600FE under the protection of the same argon atmosphere. The test results are shown in FIG. 1 to FIG. 5.

### (2) AC impedance test

Under the open circuit potential, the frequency range was 100 KHz to 0.1 Hz, and the amplitude was 50 mV; and the impedance of the all-solid-state lithium-ion batteries S1 to S15 and DS1 to DS6 before charging and discharging was tested. The test results are shown in Table 1.

### (3) Charge-discharge cycle test

The specific test conditions were: under the condition of 25±1°C, the batteries S1-S15 and DS1-DS6 were charged at a constant current of 0.01 C to a certain cut-off voltage (for the S1-S6, S9-S15, DS-1 and DS-2 batteries, the cut-off voltage was set to 2.6 V; for the S7, DS-3 and DS-4 batteries, the cut-off voltage was set to 4.1 V; for the S8, DS-5 and DS-6 batteries, the cut-off voltage was set to 4.0 V); the batteries were allowed to stand for 10 minutes; and the batteries were discharged at a constant current of 0.01C to a certain cut-off voltage (for the S1-S6, S9-S15, DS-1 and DS-2 batteries, the cut-off voltage was set to 1.0 V; for the S7, DS-3 and DS-4 batteries, the cut-off voltage was set to 2.5 V; for the S8, DS-5 and DS-6 batteries, the cut-off voltage was set to 2.4 V) as 1 cycle. The batteries were charged and discharged for 50 cycles, and the impedance of the batteries after 50 cycles was recorded. The test results are shown in Table 1.

**Table 1**

| **Battery No.** | **Impedance/ΩBefore Cycles** | **Impedance/ΩAfter 50 Cycles** | **First Charge Capacity mAh** | **First Discharge Capacity mAh** | **Coulombic Efficiency/%** | **Capacity Retention Rate/%** |
|---|---|---|---|---|---|---|
| S1 | 216 | 1204 | 987 | 874 | 88.6 | 87.6 |
| S2 | 306 | 1611 | 886 | 775 | 87.5 | 83.4 |
| S3 | 276 | 1321 | 922 | 812 | 88.1 | 86.3 |
| S4 | 258 | 1253 | 932 | 823 | 88.3 | 83.5 |
| S5 | 226 | 1228 | 955 | 838 | 87.8 | 84.2 |
| S6 | 165 | 1256 | 976 | 863 | 88.5 | 83.8 |
| S9 | 195 | 1185 | 1012 | 875 | 87.9 | 86.5 |
| S10 | 223 | 1218 | 958 | 839 | 87.6 | 86.5 |
| S11 | 232 | 1225 | 965 | 842 | 87.3 | 86.3 |
| S12 | 321 | 1307 | 942 | 817 | 86.7 | 86.1 |
| S13 | 225 | 1225 | 988 | 864 | 87.5 | 86.2 |
| S14 | 202 | 1210 | 1008 | 889 | 88.2 | 86.5 |
| S15 | 237 | 1255 | 979 | 854 | 87.2 | 86.0 |
| DS1 | 425 | 1423 | 820 | 694 | 84.6 | 87.6 |
| DS2 | 194 | 1965 | 1020 | 836 | 81.2 | 80.2 |
| S7 | 198 | 2354 | 1015 | 844 | 83.2 | 72.5 |
| DS3 | 398 | 2995 | 877 | 729 | 83.1 | 70.8 |
| DS4 | 200 | 3211 | 1012 | 823 | 81.3 | 63.2 |
| S8 | 206 | 3012 | 1210 | 983 | 81.2 | 62.8 |
| DS5 | 419 | 3821 | 1085 | 879 | 81.0 | 61.1 |
| DS6 | 201 | 4201 | 1208 | 913 | 75.6 | 51.2 |

It can be learned from Table 1 that, in the case where the negative electrode active substances were the same, after 50 cycles in a 60°C environment, the impedance of the batteries in the embodiments was much lower than that of the batteries in the comparative examples; also, in the case where the negative electrode active substances were the same, after 50 cycles in a 60°C environment, the capacity retention rate and the coulombic efficiency of the batteries in the embodiments were also larger than those of the comparative examples; after 50 cycles in a 60°C environment, although the capacity retention rate of the battery in Comparative Example 1 was slightly higher than that of the embodiments, the battery in Comparative Example 1 exhibited lower coulombic efficiency and lower charge and discharge capacities, and after 50 cycles, the impedance was very large; and it can be concluded that when the negative electrode material of the present disclosure is used in an all-solid-state lithium-ion battery, the impedance of the battery after cycles is greatly reduced and the capacity retention rate after 50 cycles is good while maintaining high charge and discharge capacities and coulombic efficiency.

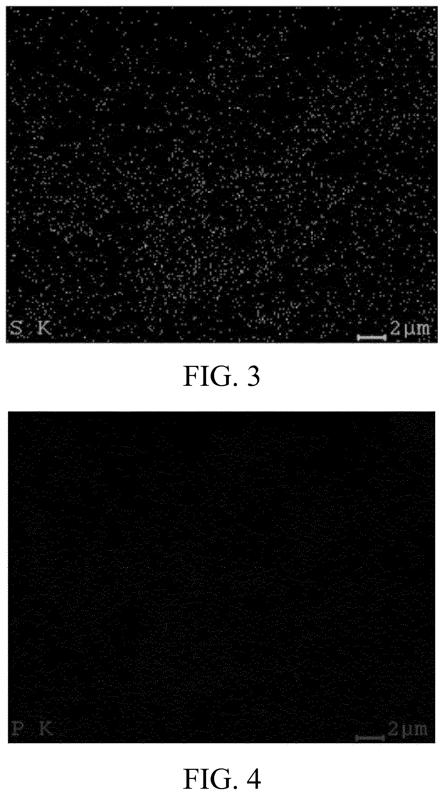

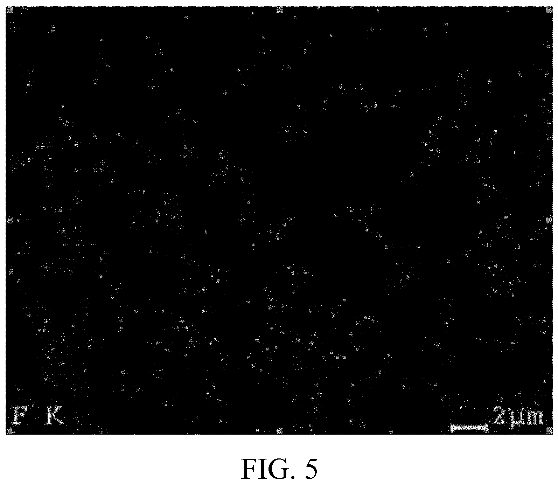

In addition, FIG. 1 is an overall microstructure of the negative electrode material, FIG. 2 is an EDS element surface scanning view of the titanium element in the region shown in FIG. 1, and it can be inferred that the region indicated by the dots in FIG. 2 is the position of the negative electrode active substance Li₄Ti₅O₁₂; FIG. 3 is an EDS element surface scanning view of the sulfur element in the region shown in FIG. 1, and since both the sulfide solid electrolyte and the polymer solid electrolyte contain the S element, it can be inferred that the region shown by the dots in FIG. 3 is the positions of the sulfide solid electrolyte and the polymer electrolyte; FIG. 4 is an EDS element surface scanning view of the phosphorus element in the region shown in FIG. 1, and since only the sulfide solid electrolyte contains the phosphorus element in Example 1, it can be inferred that the region shown by the dots in FIG. 4 is the position of the sulfide solid electrolyte; FIG. 5 is an EDS element surface scanning view of the fluorine element in the region shown in FIG. 1, and since only the polymer electrolyte (polyoxyethylene+LiN(CF₃SO₃)₂) contains the F element in Example 1, the region shown by the dots in FIG. 5 is the position of the polyelectrolyte component; and as can be learned from FIG. 1 to FIG. 5, the sulfide solid electrolyte (phosphorus element region) and the polymer electrolyte (fluorine element region) form a whole (sulfur element region) with each other. As can be learned from FIG. 1, FIG. 2 and FIG. 3, the negative electrode active substance Li₄Ti₅O₁₂ (Ti element region) is coated by the whole (sulfur element region) formed by the sulfide solid electrolyte (phosphorus element region) and the polymer electrolyte (fluorine element region), and therefore, it can be inferred that a coating layer, including a polymer electrolyte and a sulfide solid electrolyte, is formed on the surface of the negative electrode active substance.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A negative electrode material, comprising:
a negative electrode active substance, and
a coating layer on the surface of the negative electrode active substance, the coating layer comprising a polymer electrolyte and a sulfide solid electrolyte.

2. The negative electrode material according to claim 1, wherein the sulfide solid electrolyte is selected from one or more of amorphous Li₂S-P₂S₅, crystalline Li₄MS₄, crystalline Li₁₀NP₂S₁₂ and microcrystalline Li₂S-P₂S₅-LiX, wherein M is selected from one or more of Si, Ge and Sn, N is selected from one or more of Si, Ge and Sn, and X is selected from one or more of Cl, Br and I.

3. The negative electrode material according to claim 2, wherein the amorphous Li₂S-P₂S₅ is selected from one or more of amorphous 70Li₂S-30P₂S₅, amorphous 75Li₂S-25P₂S₅ and amorphous 80Li₂S-20P₂S₅; the crystalline Li₄MS₄ is selected from one or more of crystalline Li₄SnS₄, crystalline Li₄GeS₄ and crystalline Li₄SiS₄; the crystalline Li₁₀NP₂S₁₂ is selected from one or more of crystalline Li₁₀SiP₂S₁₂, crystalline Li₁₀SnP₂S₁₂ and crystalline Li₁₀GeP₂S₁₂ and the microcrystalline Li₂S-P₂S₅-LiX is selected from one or more of microcrystalline Li₂S-P₂S₅-LiCl, microcrystalline Li₂S-P₂S₅-LiBr and microcrystalline Li₂S-P₂S₅-LiI.

4. The negative electrode material according to claim 1, wherein the polymer electrolyte is selected from one or more of a polyoxyethylene-based polymer electrolyte, a polyvinylidene-fluoride-based polymer electrolyte, a polyacrylonitrile-based polymer electrolyte, a polymethyl-methacrylate-based polymer electrolyte and a polyethylene-based polymer electrolyte.

5. The negative electrode material according to claim 1, wherein the mass ratio of the polymer electrolyte to the sulfide solid electrolyte is 1:9 to 1:99.

6. The negative electrode material according to claim 1, wherein the mass ratio of the polymer electrolyte to the sulfide solid electrolyte is 9:1 to 99:1.

7. The negative electrode material according to claim 1, wherein the negative electrode active substance is selected from one or more of natural graphite, lithium titanate and silicon-carbon composite.

8. The negative electrode material according to claim 7, wherein the mass ratio of the total amount of the polymer electrolyte and the sulfide solid electrolyte to the negative electrode active substance is (50 to 5):(50 to 95).

9. A preparation method of a negative electrode material, comprising:
dissolving a polymer and a lithium salt in a weight ratio of (20 to 85):(80 to 15) in an organic solvent to prepare a polymer electrolyte;
mixing the prepared polymer electrolyte with a sulfide solid electrolyte to obtain an emulsion; and
adding a negative electrode active substance into the emulsion, and drying to obtain the negative electrode material.

10. The preparation method according to claim 9, wherein the polymer is selected from one or more of polyoxyethylene, polyvinylidene fluoride, polyacrylonitrile, polymethyl methacrylate and polyethylene; and the lithium salt is selected from one or more of LiPF₆, LiAsF₆, LiClO₄, LiBF₆, LiN(CF₃SO₃)₂, LiCF₃SO₃, LiC(CF₃SO₃)₂ and LiN(C₄F₉SO₂) (CF₃SO₃).

11. A negative electrode, comprising
a negative electrode current collector, and
a negative electrode material layer on the surface of the negative electrode current collector, the negative electrode material layer comprising a negative electrode material and a negative electrode conductive agent, wherein the negative electrode material is the negative electrode material according to any of claims 1-8.

12. The negative electrode according to claim 11, wherein the surface of the negative electrode conductive agent is coated with a polymer electrolyte and a sulfide solid electrolyte.

13. An all-solid-state lithium-ion battery, comprising a positive electrode, a negative electrode and an inorganic solid electrolyte layer, wherein the negative electrode is the negative electrode according to claim 11 or 12.

14. The all-solid-state lithium-ion battery according to claim 13, wherein there are a plurality of inorganic solid electrolyte layers, and the inorganic solid electrolytes of the inorganic solid electrolyte layers are the same or different.
